# EUROPEAN PATENT APPLICATION

(11) **EP 4 745 836 A1**
(43) Date of publication of application: **20.05.2026**
(21) Application number: 24841903.8
(22) Date of filing: 01.02.2024
(51) Int. Cl.: G06N 3/00

(54) **BINOCULAR VISION DEPTH CALCULATION SYSTEM AND BRAIN-LIKE CALCULATION MODEL**

(30) Priority: 16.07.2023 CN 202310872732
(71) Applicant: Bi, Yunjian, Hohhot, Inner Mongolia Autonomous Region 010013 (CN)
(72) Inventor: Bi, Yunjian, Hohhot, Inner Mongolia Autonomous Region 010013 (CN)
(74) Representative: JD&P Patent Attorneys Joanna Dargiewicz & Partners
(86) International application number: PCT/CN2024/075115
(87) International publication number: WO 2025/015896

(57) **Abstract**

By means of constructing neuron-like models, the present application achieves neural information encoding, inter-neuron connection self-organization, and neural calculation and output of depth estimation encoded information. A system and models provided in the present application comprise: constructing two paths of visual receptor models; constructing a visual sequence model, which, under small-amplitude, reciprocating, irregular movements of the visual receptor models, outputs visual sequence information; constructing a neural network model, which receives information input from the visual receptor models, wherein the inputted information drives a basic neural model to operate. Under visual stimulation, light-receiving units of the visual receptor models connect to the neural network in a self-organized manner, and color information and edge information of an object are separated and outputted; stimulation at a boundary line causes a general sequence model to operate, wherein all points at the boundary line are sequentially excited to form an edge sequence combined signal, the signal at this time comprising edge color sequence information and edge direction sequence information; under the action of two paths of edge sequences, a same-sequence seeking model operates, outputs an original sequence, and identifies depth information.

## Description

### TECHNICAL FIELD

The present application belongs to the technical field of cognitive neuroscience, with applications in passive vision depth calculation and brain-like calculation. More specifically, the application provides a neuronal binocular vision depth calculation system and an associated brain-like calculation model.

### BACKGROUND

Among the existing passive visual depth estimation methods, computer stereo vision depth estimation is an important estimation method. In practical applications, the binocular stereo matching algorithms are key to depth estimation. The present application provides a brain-like calculation stereo matching method and a binocular vision depth calculation system based on the bio-electrical properties of neurons. Unlike the memory-calculation separation algorithms of general computer systems, the present application constructs a brain-like calculation model based on the fundamental functions of neurons, thereby enabling functions such as neuronal information encoding in neurons, self-organization of inter-neuronal connections, and output of encoded information through neuronal calculation.

### SUMMARY

The present application provides a binocular stereo-matching method for stereo vision and an associated brain-like calculation model based on known neuronal characteristics, thereby providing a new method and system for binocular stereo-matching algorithms in stereo vision. The specific method and system include the following steps.

Step S1: A visual receptor model receives external light stimuli to form a physical object boundary and generate color and orientation information of the object boundary. The binocular vision depth calculation system first constructs two visual receptor models which input perceived visual information into a neural network model.

Step S2: The visual receptor models perform minor and irregular reciprocating motions to generate visual sequence pulses. The two visual receptor models of the binocular vision depth calculation system continuously perform minor and irregular reciprocating motions to acquire visual information from the objective world. Further, a visual sequence model is constructed. The light-receiving unit of the visual receptor model connects to the visual sequence model. The visual sequence model sequentially outputs visual information, and generates visual sequence pulse.

Step S3: Visual color information and edge information are separated. The binocular vision depth calculation system further constructs a basic neuron model (perceptual model). Pulses are input from the two visual receptor models to the neuronal network, to stimulate the basic neuron model (perceptual model) to operate. During this period, stimulus sequences received by basic neuron models (perceptual models) within continuous regions are stable. Signal excitation remains suppressed for a certain period due to inhibition of inhibitory neurons in the model. Basic neuron models (perceptual models) at edges or boundaries receive continuously varying stimulus sequences, leading to sustained excitation. This enables a temporal distinction, thereby separating the color pattern from the edge pattern.

Step S4: The color information and orientation information at object edges are processed and extracted, and integrated to form local edge neural pulse sequence information. The binocular vision depth calculation system further constructs a general sequence model. Stimuli received by the basic neuron models (perceptual models) at edges or boundaries trigger the operation of the general sequence model. Sequential excitation of points at edges or boundaries forms edge sequence combination pulses through the general sequence model. These pulses contain both edge color sequence and edge orientation sequence information.

Step S5: The sequence-synchronized matching detection of binocular object edge information achieves output of stereo information. The binocular vision depth calculation system further constructs a sequence matching model. The overall system receives inputs from both visual receptor models, both forming corresponding edge sequences. The two sequences, due to independent processing, are the same and asynchronous. Under the action of these two same-sequence but asynchronous edge sequences, the sequence matching model operates, thereby forming excitation in a new pattern and outputting the original sequence. Under the action of two sequences that are not the same, the sequence matching model has no output. Under the action of two approximately same-sequence edge sequences, the sequence matching model outputs a truncated sequence. Outputting the original sequence represents foreground depth disparity; and outputting a truncated sequence represents background disparity.

### DETAILED DESCRIPTION OF EMBODIMENTS

To make the technical solution of the present application clearer and more comprehensible, the application is further described in detail below with reference to the accompanying drawings.

Furthermore, the visual receptor model described in step S1 of FIG.1, which receives external light stimuli to form a physical object boundaries and generate associated color and orientation information, may be implemented through the visual receptor model illustrated in FIGs. 2 and 3. The characteristics of the visual receptor model are as follows.

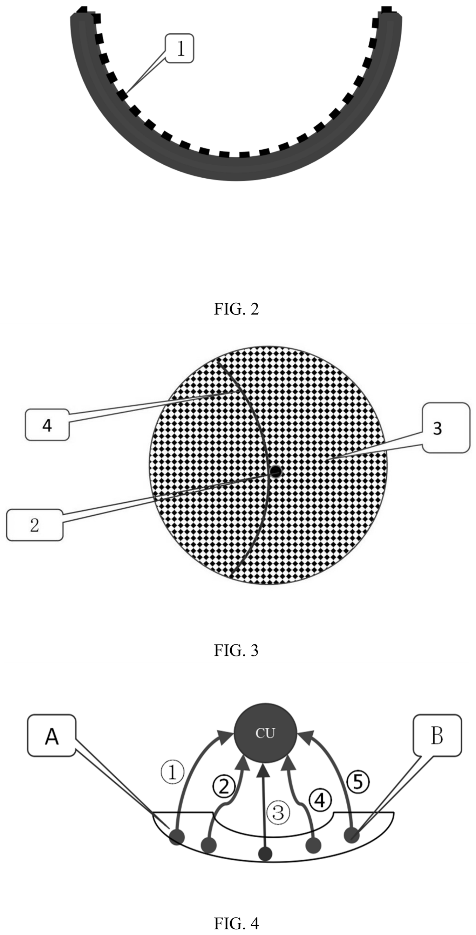

The binocular vision depth calculation system of the present application employs a pair of visual receptor models which synchronously perform minor and irregular reciprocating motion. The pair of visual receptor models simultaneously output color information sequences of the objective world's colors and boundaries. The single structure of the model is specifically shown in Figs. 2 and 3.

Fig. 2 is a side view of the visual receptor model. The model has a special hemispherical structure with uniformly distributed light-receiving units on its inner surface, as indicated by label 1 in Fig. 2. These illustrated light-receiving units receive external visible light and electromagnetic wave stimuli and convert them into electrical signals.

The visual receptor model performs minor and irregular reciprocating motion, which causes the background within the model to continuously change. The color difference between the foreground and background forms a logically defined variation boundary, referred to as the object boundary herein, as shown in Fig. 3.

Fig. 3 is a top view of the visual receptor model. Label 4 in Fig. 3 indicates the curve imaged by an external straight line on the visual receptor model. Label 2 indicates the center of the visual receptor model. Label 3 indicates the uniformly distributed light-receiving units within the model.

During synchronous minor and irregular motions of the visual receptor models, the light-receiving units at points on the boundary formed between the foreground object and the background are continuously and sequentially excited in an intermittent manner, forming a color change sequence of the boundary.

Additionally, straight lines formed by object boundaries in the objective world are imaged as curves on the visual receptor model. During synchronous minor and irregular motions of the receptor model, the rate of color change of the light-receiving units at different points on the imaged curve varies. Specifically, boundary points closer to the center of the visual receptor move at speeds closer to the actual boundary motion speed; and points farther from the center move at speeds that deviate more significantly from the actual boundary motion speed. Therefore, the difference in the rate of color change formed at the boundary on the visual receptor model contains orientation information about the object boundary in the objective world. Furthermore, the reciprocating motion generates both radial and latitudinal motion components, causing sequential excitation of boundary points.

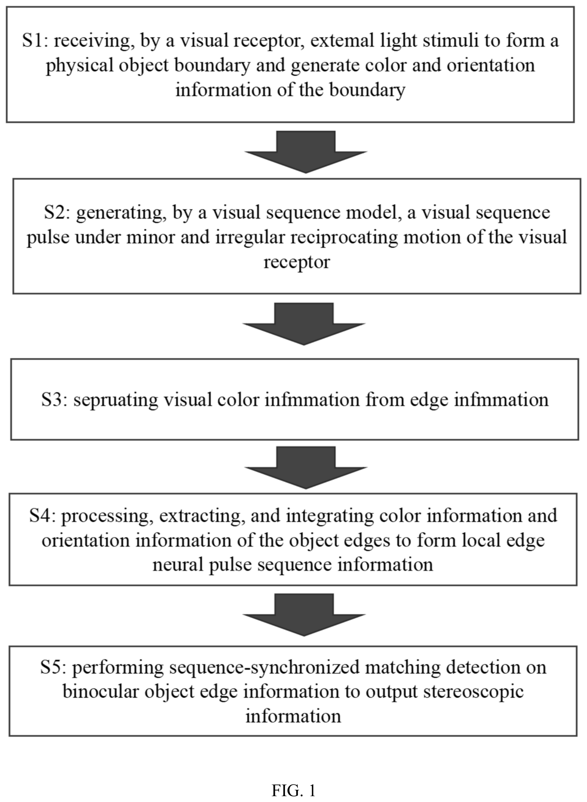

Further, "generating, by a visual sequence model, a visual sequence pulse under minor and irregular reciprocating motion of the visual receptor model" as described in step S2 of FIG. 1 requires processing of the visual sequence model illustrated in FIG. 4. The color stimuli formed by the visual receptor model are processed by the visual sequence model consisting of horizontal neuron models, thereby forming neuronal color information pulse sequences.

The horizontal inhibitory neuron model includes at least two input pathways from light-receiving units of the visual receptor. The horizontal inhibitory neuron model includes one horizontal convergence unit to which all signal pathways are connected. When the horizontal convergence unit of the horizontal inhibitory neuron model receives a pulse electrical signal from any input pathway, it inhibits electrical signals from other input pathways. After a certain interval, the horizontal inhibitory neuron suppresses the current input signal, and may then receive signals from other pathways. Through this cycle, input signals from each pathway are alternately processed by the horizontal inhibitory neuron.

The visual sequence model consists of one horizontal inhibitory neuron connected to multiple local light-receiving units in the visual receptor model. The visual sequence model receives external visual signals, and causes, through the processing, output signals from multiple light-receiving units to be sequentially excited, thereby logically forming an excitation sequence. The specific calculation process of this model is illustrated in Fig.4.

Fig.4-Visual Sequence Model: "CU" in Fig.4 represents the convergence unit of the horizontal inhibitory neuron. Label A in Fig.4 represents the visual receptor model. Label B in Fig. 4 represents the light-receiving units of the model. Labels 1, 2, 3, 4, 5 in Fig.4 represent connection pathways from the light-receiving units of the visual receptor model to the convergence units of the horizontal inhibitory neuron. When the convergence unit of the horizontal inhibitory neuron receives an excitation signal from any of pathways 1, 2, 3, 4, or 5, it sends an inhibitory signal back through the same pathway to the remaining pathways. The inhibitory signal inhibits all pathways except the one that first transmitted the excitation signal. After excitation in the current excitation pathway ceases, other remaining pathways randomly generate excitation and inhibit all other pathways, which logically forms a sequential output of electrical signals from the light-receiving units.

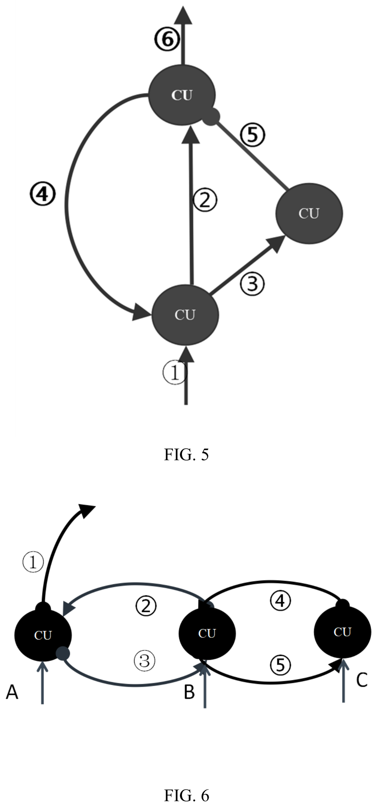

Further, "separating visual color information from edge information" as described in step S3 of Fig. 1 requires collaborative processing among neuron models, neuronal network models, and the basic neuron model shown in Fig. 5.

Neuron models are divided into excitatory neuron models and inhibitory neuron models . Their characteristics are as follows.

The excitatory neuron model receives excitatory inputs and outputs excitatory signals. It has at least three input signal pathways, of which at least two are excitatory pathways and at least one is an inhibitory pathway. It has at least two output signal pathways, both of which are excitatory. When the pulse signals carried by input pathways or the excitation effects are in a high-frequency state, or the connected target neuron convergence unit maintains in a sustained high-excitation state, the efficiency of the input pathway increases and maintains for a certain time. The convergence unit of ot the excitatory neuron model transmits excitatory pulse signals to all output pathways.

The excitatory neuron model includes one convergence unit. The convergence unit aggregates signal levels and delays the output pulse signal. It receives pulse signals from all input pathways, aggregates them to a certain level, and then emits pulse signals to all output pathways. When the convergence unit receives signals from a high-efficiency input pathway, the delay is shortened or even eliminated, resulting in rapidly emitting pulses to the output pathway.

The inhibitory neuron model receives excitatory inputs and outputs inhibitory signals. It has at least two input signal pathways, of which at least one is excitatory and at least one is inhibitory. It has at least one output signal pathway, which is inhibitory. When the pulse signals carried by the input pathway or the excitation effects are in a high-frequency state, or when the connected convergence unit of the target neuron is in a sustained high-excitation state, the efficiency of the input pathway increases and maintains for a certain time. The output pathways of the inhibitory neuron model may sense the signal level of the connected convergence unit. The inhibitory efficacy of the output pathway has a positive linear relationship with the signal level of the connected convergence unit.

The inhibitory neuron model includes one convergence unit. The convergence unit aggregates signal levels and delays the output of pulse signals. It receives pulse signals from all input pathways, aggregates them to a certain level, and then emits pulse signals to all output pathways. When the convergence unit receives signals from high-efficiency input pathways, the delay is shortened or even eliminated, resulting in rapidly emitting pulses to output pathways. The convergence unit of the inhibitory neuron model transmits inhibitory pulse signals to all output pathways.

When the convergence units of both excitatory and inhibitory neuron models receive inhibitory pulse signals from input pathways, the inhibitory signals are aggregated at the convergence unit, thereby reducing the probability of the convergence unit outputting a pulse signal.

The convergence units of both excitatory and inhibitory neuron models do not output any pulse signals without external signal input.

When the convergence units of both excitatory and inhibitory neuron models receive excitatory signals from input pathways, the excitatory signals are aggregated at the convergence unit, thereby increasing the probability of the convergence unit outputting the pulse signal, or resulting in signal transmission through output pathways.

Further, when the input pathway is an initial pathway, there is a time delay between the input signal and the corresponding signal generated by the convergence unit. However, when the input pathway is a high-efficiency pathway, the time delay is shortened or even eliminated.

When the convergence units of both excitatory and inhibitory neuron models receive excitatory signals from input pathways, cumulative effect is stronger for long-sequence signals or signals from high-efficiency pathways, which is easier to excite signal output from the output pathways.

The convergence units of both excitatory and inhibitory neuron models may simultaneously receive excitatory signals from two or more input pathways. If excitation signals from multiple input pathways are temporally synchronized, each pathway's input functions identically to that of any single excitatory signal, resulting in no superimposed strengthening of the pulse signal generated by the convergence unit. If the excitation signals from multiple input pathways are temporally asynchronous, the inputs produce signal enhancement at the convergence unit.

Further, the above "neuronal network model" has the following characteristics.

The neuronal network model consists of excitatory neuron models and inhibitory neuron models interconnected via input and output pathways. Each excitatory neuron model is connected to at least one surrounding excitatory neuron model and one inhibitory neuronal model. Each inhibitory neuron model is connected to at least one excitatory neuron model as an output and at least one excitatory neuron model as an input. In the neuronal network model, all neuron models have the potential to be connected to other neurons.

Further, under the influence of external stimuli, the neuronal network model autonomously forms, at a local mesoscopic level, the basic neuron model (perceptual model), general sequence model, sequence matching model, effector perceptual model, and logical perceptual model.

The basic neuronal model, also known as the perceptual model, is referred to in this application as the basic neuron model (perceptual model). Its characteristics are as follows. The basic neuron model (perceptual model) consists of a local excitatory source neuron, an excitatory target neuron, and an inhibitory neuron in the neuronal network model, interconnected in an initial state. When the basic neuron model receives external stimulus signals, it forms an interconnected loop. Under the action of the loop, signals carried by the pathway between the source and target neurons are in a high-frequency state, and signals at the target neuron accumulates continuously, thereby enhancing transmission efficiency. Under the action of the inhibitory loop, the model achieves signal separation and output. The specific operation process of the model is shown in Fig. 5.

In the basic neuron model (perceptual model) in Fig. 5, label CU 1 represents a convergence unit of the excitatory source neuron, label CU 2 represents a convergence unit of the excitatory target neuron, label CU 3 represents a convergence unit of the inhibitory neuron, arrows represent pathways between neurons numbered as 1, 2, 3, 4, 5, 6, the pathways 1, 2, 3, 4, 6 are excitatory pathways carrying excitatory signals, and the pathway 5 is an inhibitory pathway carrying inhibitory signals.

Under the condition that neuron models in the neuronal network model are interconnected, a local excitatory source neuron, an excitatory target neuron, and an inhibitory neuron form the basic neuron model (perceptual model) through initial-state connections, as shown in Fig. 5. The basic neuron model (perceptual model) is in an initial state of the first stage. Except for the pathway 1, all other pathways are in the initial effect stage. No signal transmission occurs in these pathways. The transmission efficiency of all pathways remains unchanged.

Further, the basic neuron model (perceptual model) enters its second stage (initial excitation state). A pulse signal input through the pathway 1 passes directly through the convergence unit (CU 1) of the source neuron and is then aggregated and accumulated through the pathway 2 at the convergence unit (CU 2) of the target neuron. The pulse signal input through the pathway 1 also passes directly through CU1 and is then aggregated and accumulated through the pathway 3 at the convergence unit (CU 3).

Further, the basic neuron model (perceptual model) enters its third stage (loop formation state). When signal accumulation in the convergence unit (CU 2) through pathway 2 reaches a certain threshold, pulse signals are generated in the pathways 4 and 6. When signal accumulation in the convergence unit (CU 3) through pathway 3 reaches a certain threshold, an inhibitory pulse signal is generated in the pathway 5. The inhibitory pulse signal in the pathway 5 suppresses the excitatory pulse signals in the pathways 4 and 6. Due to the accumulation effect at CU 3, the inhibitory signal from the pathway 5 is delayed relative to the excitatory signal from the pathway 2 generated at CU 1. In the initial stage of the loop, the inhibitory effect of the pathway 5 is weaker than the excitatory effect of the pathway 2.

Further, the basic neuron model (perceptual model) enters its fourth stage (high-frequency feedback state). With enhanced efficacy of the pathway 4 and under the combined action of the pulse signal in the pathway 4 and the input pulse signal in the pathway 1, the frequency of pulse signals in the pathways 2 and 3 accelerates, leading to faster accumulation effects at CU 2 and CU 3. The high-frequency signals in the pathway 2 accelerate signal accumulation at CU 2, which in turn increases the signal frequency in the pathway 4. The pathways 2 and 4 thus form a positive feedback loop, and the signal frequency in this loop continuously increases. Additionally, the signal transmission frequency in the pathway 3 also increases. Due to accumulation at CU 2, signals in the pathway 4 are delayed relative to those in the pathways 2 and 3.

Further, the basic neuron model (perceptual model) enters its fifth stage (pathway gain state). A positive feedback loop pathway is formed between pathways 2 and 4. The overall signal frequency of the feedback loop continuously increases. Under the action of high-frequency signals, the accumulation effects at CU 2 and CU 3 continue to increase until the pathways 2 and 3 gradually become high-efficiency excitatory pathways. In these pathways, signal transmission delay at the CU 2 and CU 3 is shortened or even eliminated.

Additionally, the basic neuron model (perceptual model) enters a pathway inhibition enhancement State. The pathway 5, which forms an inhibitory pathway, has an electronic pathway for synchronizing potential. The stimulus level from the pathway 2 increases the potential level at CU 2. Under potential synchronization, the inhibitory effect of the pathway 5 gradually strengthens. However, there is a delay difference between the efficiency increase of the pathway 5 and that of the pathway 2. Therefore, during the rising phase of signal frequency in the overall loop system, the inhibitory effect of the pathway 5 is weaker than the excitatory stimulation from the pathway 2. Only after the signal frequency of the overall loop system reaches a high-frequency state and maintains for a certain time, the inhibitory effect of the pathway 5 and the excitatory effect of the pathway 2 reach an excitation-inhibition balance at CU 2.

Further, the basic neuron model (perceptual model) enters its sixth stage (model formation state). After the inhibitory effect of the pathway 5 in the high-frequency state and the excitatory effect of the pathway 2 reach excitation-inhibition balance, the inhibitory effect of the pathway 5 rapidly suppresses signal transmission in the loop system. The pathways 2, 3, 4 reach a high-efficiency communication state, and the model enters a stable state.

Further, the basic neuron model (perceptual model) enters its seventh stage (operating state). After the efficient transmission state of the pathways 2 and 3 is formed in the model, the inhibitory effect of the pathway 5 enters an efficient state. However, compared to the excitatory effect of the pathway 2, there is a delay in the inhibition from the pathway 5 during the initial phase of system signal transmission. Under a stimulus from the pathway 1, the system transmits the original sequence carried by the pathway 1. However, in the later stage of continuous transmission, signals from the pathway 1 may no longer be transmitted through the pathways 4 and 6.

In the formation of other brain-like calculation functional models, the basic neuron model (perceptual model) is also the basic model for establishing efficient connections between source and target neurons. The basic model encompasses different excitation conditions for CU 2. These conditions for exciting CU 2 include, but are not limited to: 1. After being excited by efficient pathways from other neurons, a temporarily high-level potential is produced, and CU 2 is in an easily excitable state. Stimulation from other ordinary connection pathways may then stimulate CU 2 to produce excitation; 2. After an ordinary connection pathway connects to CU 2, a long sequence or repeated sequence stimulus in the pathway excite CU 2 due to the cumulative effects; 3. When two ordinary connection pathways connect to CU 2 and act simultaneously on CU 2, two stimuli are the same sequence yet asynchronous, or approximately identical yet asynchronous, resulting in excitation at CU 2; 4. During continuous stimulation from reverse connection of other neurons that have established efficient pathways to CU 2, an easily excitable state is formed, resulting in excitation at CU 2; 5. CU 2 is in an easily excitable state during high-frequency excitation within a signal loop.

Further, "separating visual color information from edge information" as described in the step S3 of Fig. 1 refers to a process in which the neuronal network model receives electrical signal stimuli from the visual receptor model, resulting in the formation and operation of the basic neuron model (perception model). During the process, the stimulus sequences received by the basic neuron models (perception models) within a contiguous region remain stable, and are inhibited by inhibitory neurons over a certain period and remain in an inhibited state. The stimulus sequences received by the basic neuron models at edges or boundaries vary continuously and forms an excitation. The temporal distinction enables separation between color patterns and edge patterns.

Further, "processing, extracting, and integrating of the color information and the orientation information of the object edge to form local boundary neural pulse sequence information" as described in step S4 of Fig. 1 requires collaborative processing by the neuron model, the neuronal network model, and the neuron mesoscopic model. The neuron model and neuronal network model are the same as those described in the step S3. The neuron mesoscopic model employs the general sequence model and sequence matching model for information processing.

The general sequence model is characterized by including multiple excitatory neurons that are sequentially excited and connected in sequence, and outputting sequence signals after processing. The specific model operation process is shown in Fig. 6.

In Fig. 6, label CU 1 represents a convergence unit of a first excited excitatory neuron, label CU 2 represents a convergence unit of a second excited excitatory neuron, label CU 3 represents a convergence unit of a third excited excitatory neuron. Arrowed lines represent pathways between neurons, numbered as 1, 2, 3, 4, 5. All pathways 1, 2, 3, 4, 5 are excitatory pathways for carrying excitatory signals. Labels A, B, C represent sequential stimuli received as inputs by the neurons. The figure shows only three sequentially excited neurons. In practice, more may be added by analogy.

In a first stage of the general sequence model, a first neuron in the temporal sequence is excited to receive A sequence stimulus and emit a pulse signal A through the pathway 1, while the convergence unit remains in a ready-to-excite state. In a second stage of the general sequence model, a second neuron in the temporal sequence is excited to connect to CU 1 of the first neuron (which is being excited or has been excited) through the pathway 2 in an initial state. Since CU 1 is in a ready-to-excite state, neuron 1 is excited again. The continuous sequence stimuli of the pathway 2 enables the formation of a feedback pathway 3, resulting in a feedback loop between the pathways 2 and 3. In a third stage of the general sequence model, the loop of the pathways 2 and 3 generates high-frequency stimulation, resulting in the high efficiency of the pathway 2. The mechanism for forming efficient transmission pathways in this model is the same as that of the basic neuron model (perceptual model). The excitation-inhibition loop is not described in detail again. There are inhibitory pathways between each neuron connection segment in Fig. 6, and their operation process is the same as the inhibitory pathways in the basic neuron model. However, these inhibitory connections are not shown in Fig.6. When the next A, B, C sequences are excited, the pathway 1 transmits the A+B sequence.

In a forth stage of the general sequence model, a third neuron in the temporal sequence is excited, and is connected to CU 2 of a second neuron which has been excited via the pathway 4. Since CU 2 is at a high potential, the second neuron is excited again. Continuous sequence stimulus from the pathway 4 forms a feedback pathway 5. The pathways 4 and 5 form a feedback loop. In a fifth stage of the general sequence model, the loop formed by the pathways 4 and 5 generates high-frequency stimuli, resulting in the pathway 4 becoming highly efficient. When the next A, B, C stimulus sequence A, B, C appears, the pathway 1 transmits the sequence A+B+C. By analogy, more sequentially excited neurons in the general sequence model may generate corresponding stimulus sequences.

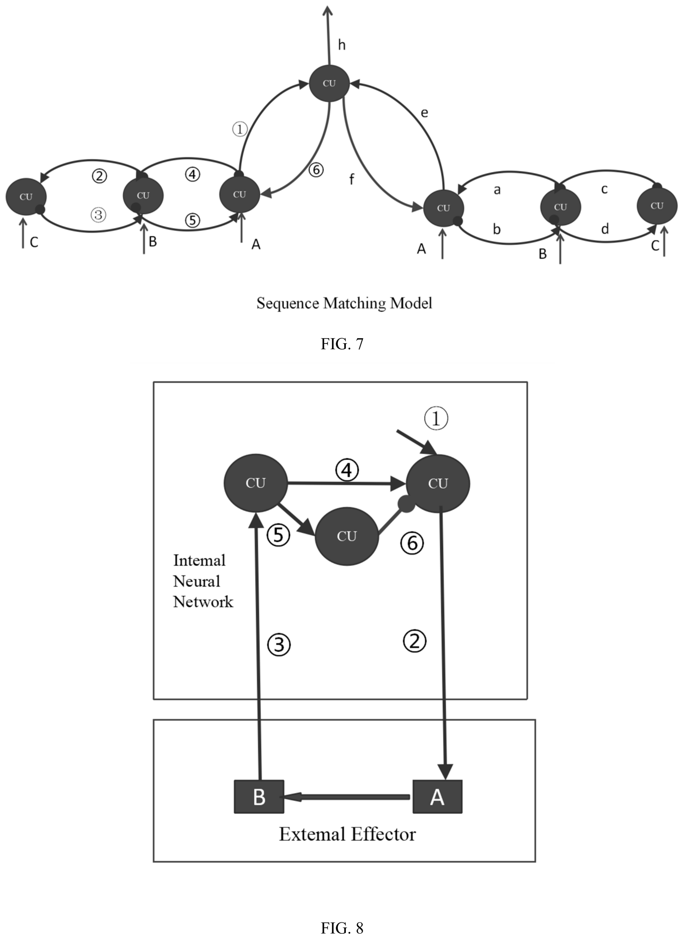

The sequence matching model is characterized by comprising two excitatory neuronal sequence chains. After processing, it outputs the original sequence signal. The specific model operation process is shown in Fig. 7.

In Fig. 7, label CU 1 represents a convergence unit of a first excited excitatory neuron of the excitatory neuron sequence chain in the general sequence model, label CU 2 represents a convergence unit of a second excited excitatory neuron of the excitatory neuron sequence chain in the general sequence model, label CU 3 represents a convergence unit of a third excited excitatory neuron of the excitatory neuron sequence chain in the general sequence model. Arrowed lines represent pathways between neurons, numbered as 1, 2, 3, 4, 5, 6. All pathways 1-6 are excitatory pathways for carrying excitatory signals. Labels A, B, C represent sequence stimuli received as input by each neuron. The pathways 3 and 5 are highly efficient pathways. CU 1, CU 2, CU 3 have formed the excitatory neuron sequence chain of the general sequence model via the pathways 3 and 5. Label CU 7 represents a convergence unit of the matching neuron in the sequence matching model. Label h represents an output pathway of the sequence matching model.

In Fig.7, label CU 4 represents a convergence unit of a first excited excitatory neuron in the excitatory neuron sequence chain of the second general sequence model, label CU 5 represents a convergence unit of a second excited excitatory neuron in the excitatory neuron sequence chain of the second general sequence model, label CU 6 represents a convergence unit of a third excited excitatory neuron in the excitatory neuron sequence chain of the second general sequence model. The arrowed lines represent neural pathways, labeled as a, b, c, d, e, f, all of which are excitatory pathways where excitatory signals are transmitted. Labels A, B, C represent sequence stimuli received as input by the neurons. The pathways a and c are high-efficiency pathways, and CUs 4, 5, 6 have already formed an excitatory neuron sequence chain of the general sequence model via the pathways a and c. In Fig.7, inhibitory link pathways exist between each neuronal link segment, and operates similarly to the inhibitory pathways in the basic neuron model, which is not drawn and depicted here. The mechanism by which pathways become highly efficient in this model is identical to that of the basic neuron model (perceptual model). The excitation loop and the inhibition loop are not described in detail again.

In a first stage ot initial state of the sequence matching model, CUs 1, 2, 3 output a sequence A+B+C. CUs 4, 5, 6 also output a sequence A+B+C under the same excited stimulus. Although the two sequences are identical, their arrivals at CU 7 are asynchronous due to differences between the convergence units.

In a second stage of output state of the sequence matching model, when two sequences act on the convergence unit (CU 7), they produce a simultaneous detection effect and sequence accumulation. Feedback loops are formed in the pathways 1 & 6 and e & g, respectively. Under high-frequency stimuli within their respective feedback loops, pathway effect gains 1 and e each enter a high-efficiency transmission state. However, the 1 & 6 loop and the e & f loop sequentially reach the high-efficiency state. Under the constraints of the loop reaching the high-efficiency first together with its inhibitory pathways, the loop reaching the high-efficiency state later becomes suppressed, which results in no signal output at the CU 7. Thus, the signal sequence transmitted through the pathway h becomes identical to the sequence carried by the loop which reaches the high-efficiency state first.

Further, "processing, extracting, and integrating color information and orientation information of the object edges to form local edge neural pulse sequence information" as described in step S4 of Fig. 1 is the operation of the general sequence model caused by continuous excitation of stimulus sequences received by the basic neuron model (perceptual model) at edges or boundaries. Continuous excitation of points at edges or boundaries forms edge sequence combination pulses via the general sequence model. These pulses include edge color sequence information and edge orientation sequence information. Additionally, during the step S4, formed sequences received by the basic neuron model (perceptual model) within contiguous regions also excite the operation of the sequence matching model and general sequence model to form a regionally unified color information sequence. Under the integration performed by the general sequence model and sequence matching model, all color sequences within the region are output as the original color sequences, which are output of the color perception pattern.

Further, "performing sequence-synchronized matching detection on binocular object edge information to output stereoscopic information" as described in step S5 of Fig. 1 requires processing of the sequence matching model. The model in this step is the same as in the previous step.

Further, the system receives inputs from two visual receptor models, each generating its corresponding edge sequence. Due to independent processing, identical sequences from both pathways are the same but not synchronized. Under the action of the two same-sequence but asynchronous edge sequences, the sequence matching model operates to form excitation in a new pattern and output the original sequence. Under the action of two sequences that are not the same sequence, the sequence matching model has no output. Under the action of two approximately same-sequence edge sequences, the sequence matching model outputs a truncated sequence. Output of the original sequence represents foreground depth disparity, while output of the truncated sequence represents background disparity.

The principle by which the above neurons operate in coordination may also give rise to neural network models for learning to use effectors and for learning to apply logical concepts. The operating principles of the corresponding models are described below.

The effector perceptual model is characterized by forming implicit neural action patterns or memories (i.e., establishing a efficient connection between sensory neurons and action planning neurons) through an interaction between an external effector (e.g., a wrist joint formed by muscles and bones) and the internal neural network. The external effector, the sensory neurons and action planning neurons form a loop connection. The pulse signal or excitation signal formed under stimulation is transmitted at high frequency within the loop. The neuronal connection between the sensory neurons and action planning neurons become highly efficient under the action of high-frequency pulse signal or excitation signal. The specific model formation and operation process is shown in Fig. 8.

In Fig. 8, Label CU 1 represents a convergence unit of the sensory neurons in the effector perceptual model, label CU 2 represents a convergence unit of action planning neurons, label CU 3 represents a convergence unit of inhibitory neurons. Label A represents an action part of the external effector. Label B represents a sensory part of the external effector. The arrowed line from A to B represents driving linkage between external effectors, while the other arrowed lines represent pathways between neurons, numbered as 1, 2, 3, 4, 5, and 6. The pathways 1, 2, 3, 4, and 5 are excitatory pathways transmitting excitatory signals, whereas pathway 6 is an inhibitory pathway transmitting inhibitory signals. The pathways 1, 2, and 3 are already formed as high-efficiency pathways, while the pathways 4 and 5 are in their initial state. In Fig.8, inhibitory link pathways exist between each neuronal link segment, except for the inhibitory bypass between CU 1 and CU 2. The accompanying inhibitory bypasses for other excitatory pathways are not depicted or described.

In a first stage of the effector perception model, the action planning neurons (CU 2 in Fig.8) are stimulated to activate the pathway 2. The pathway 2 drives the action part A of the external effector. The action part A changes the sensory part B. The sensory part B of the effector then outputs a stimulus, to excite sensory neurons in the neural networks. CU 2 remains in an easily excitable state under continuous stimulation from the pathway 1.

In a second stage of the effector perception model, sensory neurons in the neural network are excited to send signals outward, The signals excite the action planning neurons (CU 2 in Fig.8) that are at a high potential level. A loop is formed among the sensory neurons, action planning neurons, and effector. Signals transmitted in this loop are self-excited, and high-frequency signals are generated, resulting in the pathway between sensory neurons and action planning neurons becoming highly efficient. Additionally, as the inhibitory neuron bypass becomes highly efficient, the signal action in the loop gradually reach a balanced state and eventually enter a resting state.

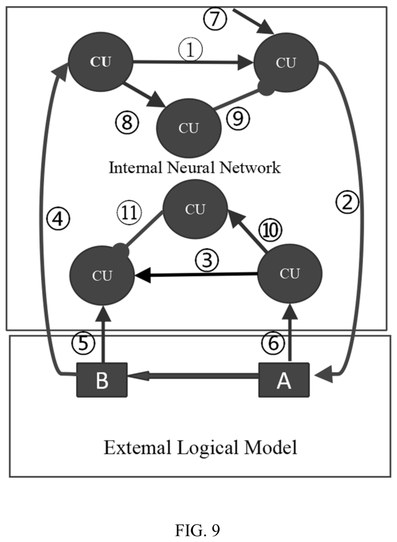

The logical perception model is characterized in that: an interaction between external logic and the internal neural network forms implicit logical neural connections, the operation of external logic forms a loop connection with the neural network, signals driven under stimuli are transmitted at high frequency within the loop. Additionally, the cause-and-effect of the logic is mapped in the neural network to form distinct neural patterns, thereby forming high-frequency signal connections. The neural connections mapping the cause-and-effect of logic in the neural network become highly efficient under the action of high-frequency signals. The specific formation and operation process of the model are illustrated in Fig. 9.

In Fig. 9, label CU 1 represents a convergence unit of a neuron formed in the neural network mapping the "result" of the external logical model. Label CU 2 represents a convergence unit of a neuron formed in the neural network mapping the "cause" of the external logical model. Label CU 3 represents a convergence unit of a "consequence" neuron. Label CU 4 represents a convergence unit of an "intention" neuron. Labels CU 5, CU 6 represent convergence units of inhibitory neurons. Label A represents a cause part of the external logic, and label B represents a result part of the logic. The arrowed line from A to B represents logic of the external logic. Other arrowed lines represent pathways between neurons, numbered as 1, 2, 3, 4, 5, 6, 7, 8, 9, 10, 11. The pathways 1, 2, 3, 4, 5, 6, 7, 8, 10 are excitatory pathways transmitting excitatory signals, while the pathways 9 and 11 are inhibitory pathways transmitting inhibitory signals. The pathways 2, 4, 5, 6, 7 are already formed as high-efficiency pathways, while the pathways 1, 3, 8, 10 are in their initial state. Inhibitory link pathways exist between each neuronal link segment in Fig. 9, apart from the inhibitory bypass between CU 2 and CU 1, and the inhibitory bypass between CU 3 and CU 4. The accompanying inhibitory bypasses for other excitatory pathways are not drawn or described.

In a first stage of the logical perceptual model, the cause end (A) and result end (B) of the external logical model are separately mapped within the neuronal network to form distinct neuronal patterns, i.e., mapping connections with the neuron convergence units CU 1 and CU 2 are formed in the neural network .

In a second stage of the logical perception model, a convergence unit (CU 4) of the intention-pattern neuron drives the cause end of the external logical model, which in turn drives the result end. The result end activates the consequence pattern (the convergence unit CU 3 of the neuron) within the internal neural network. Under continuous stimulation from the intention stimulus pathway (the pathway 7), CU 4 remains in a easily excitable state, and the activation of CU 3 further excites the easily excitable CU 4, thereby forming an excitation loop. High-frequency signals are transmitted within this logical application loop, thereby causing the pathway 1 to function as a high-efficiency pathway.

In a third stage of the logical perception model, the loop transmission of high-frequency signals in the logical application loop causes the cause end A and result end B to repeatedly excite their corresponding CU 2 and CU 1, thereby resulting in high-frequency signals between CU 2 and CU 1. Ultimately, the pathway 3 between CU 2 and CU 1 develops into a high-efficiency pathway, thereby establishing an internal logical model within the neural network.

The visual receptor model, horizontal inhibitory neuronal model, visual sequence model, basic neuron model (perceptual model), general sequence model, sequence matching model, effector perceptual model, and logical perceptual model described above are all fundamental models of brain-like calculation. These models not only function in this instance but also play roles in various brain-like calculation functions. Any brain-like or neural calculation systems implementing functions through coordination and combinations of these models should all fall within the protection scope of the present application.

The embodiments described in conjunction with the drawings illustrate the technical solution of the present application. However, those skilled in the art will readily appreciate that the protection scope of the neuron models of the present application is not limited to the specific implementations. Without departing from the principles of the application, those skilled in the art may make equivalent modifications or substitutions to related technical features, and all such modified or substituted technical solutions shall all fall within the protection scope of the present application.

Although the basic neuron model of the present application is explained through specific embodiments, those skilled in the art should appreciate that various modifications and equivalent substitutions may be made without departing from the scope of the application. The models and method steps described in the disclosed embodiments are not limited to implementation by electronic hardware, computer software, or a combination thereof. Any modifications made to the present application through various implementations should remain within the scope of the application. Therefore, the present application is not limited to the specific embodiments disclosed, but should include all embodiments falling within the scope of the appended claims.

### DESCRIPTION OF THE DRAWINGS

In the drawings:
Fig. 1 is a flowchart of a binocular vision depth calculation system and a brain-like calculation model according to the present application;
Fig. 2 is a side structure view of a visual receptor model in the binocular vision depth calculation system and the brain-like calculation model according to the present application;
Fig. 3 is a top structure view of a visual receptor model structure in the binocular vision depth calculation system and the brain-like calculation model according to the present application;
Fig. 4 is a schematic structure and construction step diagram of a visual sequence model in the binocular vision depth calculation system and the brain-like calculation model according to the present application;
Fig. 5 is a schematic structure and construction step diagram of a basic neuron model (perceptual model) structure in the binocular vision depth calculation system and the brain-like calculation model according to the present application;
Fig. 6 is a schematic structure and construction step diagram of a general sequence model in the binocular vision depth calculation system and the brain-like calculation model according to the present application;
Fig. 7 is a schematic structure and construction step diagram of a sequence matching model in the binocular vision depth calculation system and the brain-like calculation model according to the present application;
Fig. 8 is a schematic structure and construction step diagram of an effector perceptual model in the binocular vision depth calculation system and the brain-like calculation model according to the present application;
Fig. 9 is a schematic structure and construction step diagram of a logical perceptual model in the binocular vision depth calculation system and the brain-like calculation model according to the present application.

## Claims

1. A binocular vision depth calculation system and a brain-like calculation model, wherein the system and a construction method comprise:
step S1: receiving, by a visual receptor model, external light stimuli to form a physical object boundary and generate color information and orientation information of the object boundary;
step S2: generating, by a visual sequence model, a visual sequence pulse under minor and irregular reciprocating motion of the visual receptor model;
step S3: separating visual color information from edge information;
step S4: processing, extracting, and integrating the color information and orientation information of the object boundary to form local edge neural pulse sequence information; and
step S5: performing sequence-synchronized matching detection on binocular object edge information to output stereoscopic information.

2. The system and model according to claim 1, wherein the step S1 comprises:
constructing a visual receptor model, the visual receptor model with a special hemispherical light-receptor structure whose inner surface is uniformly arranged with light-receiving units to convert optical signals into electrical signals; wherein the binocular vision depth calculation system employs a pair of visual receptor models which simultaneously output color sequence information and boundary sequence information of an objective world; color difference between foreground and background stimuli forms a logical change boundary, which is referred to as an object boundary; the pair of visual receptor models synchronously perform the minor and irregular reciprocating motion, resulting in the backgrounds in the pair of visual receptors models to continuously change; when the pair of visual receptor models synchronously perform the minor and irregular reciprocating motion, a light-receptor at each point along a boundary formed between a foreground object and a background is continuously, sequentially, and intermittently excited, thereby generating change sequence information of the boundary; a straight line in the objective world is imaged as a curve on the visual receptor models; when the visual receptor models synchronously perform the minor and irregular reciprocating motion, a rate of color change varies at each point along the curve imaged on the visual receptor models; varing rates of color change along the boundary on the visual receptor models comprises orientation information about the object boundary in the objective world.

3. The system and model according to claim 1, wherein the step S2 comprises:
constructing a horizontal inhibitory neuron model and a visual sequence model,
after a pulse electrical signal is received from any input pathway, a horizontal convergence unit of the horizontal inhibitory neuron model suppresses electrical signals from other input pathways; after a certain interval, a horizontal inhibitory neuron suppresses a current input signal and may receive signals from other pathways, so that input electrical signals from various pathways are successively received by the horizontal inhibitory neuron; the visual sequence model comprises one horizontal inhibitory neuron connected with multiple visual input pathways; and the visual sequence model receives and processes external visual signals and outputs the processed visual signals.

4. The system and model according to claim 1, wherein the step S3 comprises:
constructing an excitatory neuron model for receiving an excitatory input and outputting an excitatory signal; constructing an inhibitory neuron model for receiving an excitatory input and outputting an inhibitory signal; constructing a neuronal network model comprising an excitatory neuron model and an inhibitory neuron model interconnected through input/output pathways, wherein all neurons in the neuronal network model have a potential to be connected with other neurons; constructing a basic neuron model (perception model), also referred to as a local mesoscopic basic model, which comprises an excitatory source neuron, an excitatory target neuron and an inhibitory neuron interconnected, wherein when an external stimulus signal is received in the basic neuron model (perceptron model), an interconnected loop is formed; under an action of the loop, a pathway between the source neuron and the target neuron achieves high-frequency signal transmission and continuous signal accumulation in the target neuron, thereby enhancing transmission efficiency; and the basic neuron model achieves signal separation and output under the action of the inhibitory loop.

5. The system and model according to claim 1, wherein the step S4 comprises:
constructing a general sequence model which comprises a plurality of excitatory neurons that are sequentially excited and connected and outputs a sequence signal after processing it; wherein a basic neuron model (perception model) at an edge/boundary is stimulated to continuously activate the general sequence model; points along the edge/boundary sequentially activate the general sequence model to form an edge sequence combination pulse, which comprises color sequence information of the edge and orientation sequence information of the edge, in the step 4, a basic neuron model (perceptual model) within a contiguous region is stimulated to activate a sequence matching model and the general sequence model, thereby generating a regionally unified color information sequence; under integration of the general sequence model and the sequence matching model, all color sequences within the region are integrated into an original color sequence output, which is output of color perception pattern.

6. The system and model according to claim 1, wherein the step S5 comprises:
constructing a sequence matching model comprising two general sequence models, each formed by a chain of excitatory neurons, which are connected together to output an original sequence signal after processing;
wherein the sequence-synchronized matching detection of binocular edge information requires processing by the sequence matching model to implement output of stereoscopic information; the system receives inputs from two visual receptor models where two corresponding edge sequences are generated; the two sequences are identical yet asynchronous because of independent processing; under an action of these two identical yet asynchronous edge sequences, the sequence matching model operates to generate excitation in a new pattern and output the original sequence; when the two edge sequences are different, the sequence matching model produces no output; under an action of two approximately identical sequence sequences, the sequence matching model outputs a truncated sequence; output of the original sequence represents foreground depth disparity, while output of the truncated sequence represents background disparity.

7. An effector perception model provided by the present application, wherein an implicit neuronal action pattern or memory is formed through an interaction between an external effector ( for example a wrist joint formed by muscles and bones) and an internal neural network, that is, an efficient connection is established between sensory neurons and motor planning neurons; the external effector form a loop connection with the sensory neurons and the action planning neurons; a signal formed under a stimulus is transmitted at high frequency in the loop; a neuronal connection between the sensory neurons and the motion planning neurons becomes efficient under an action of the high-frequency signal.

8. A logical perception model provided by the present application, wherein an implicit logical association is formed through an interaction between external logic and an internal neural network, an operation of the external logic and the neural network form a loop connection, a signal formed under a stimulus is transmitted at high frequency in the loop; a logical cause-and-effect relationship is mapped in the neural network to form a separate neuronal pattern where a high-frequency signal connection is established; mapping into inter-neuron connections from the logical cause-and-effect relationship in the neural network become efficient under the action of the high-frequency signal.

9. A binocular vision depth calculation system and a brain-like calculation model, wherein a pair of visual receptors input stimuli into a neural network under minor and irregular reciprocating motion; a disparity signal is output through coordinative processing of the visual receptor model, a horizontal inhibitory neuron model, a visual sequence model, a basic neuron model (perception model), a general sequence model, and a sequence matching model; a construction method provided by the present application comprises the visual receptor model, the horizontal inhibitory neuron model, the visual sequence model, the basic neuron model (perception model), the general sequence model, the sequence matching model, the effector perception model, and the logical perception model which are basic brain-like calculation models, and function not only in the instance but also function in various functionalities of the brain-like calculation; in other brain-like calculation or neural calculation, functions achieved through collaboration or combination of the models shall fall within the scope of protection of the present application.
